# EUROPÄISCHE PATENTSCHRIFT

(11) **EP 2 934 971 B1**
(45) Veröffentlichungstag und Bekanntmachung des Hinweises auf die Patenterteilung: **07.11.2018**
(21) Anmeldenummer: 13791737.3
(22) Anmeldetag: 07.11.2013
(51) Int. Cl.: B60T 8/88, B60T 7/22, B60T 17/22

(54) **VERFAHREN ZUM BETREIBEN EINES EINEN AUTONOMEN FAHRMODUS AUFWEISENDEN FAHRZEUGS, STEUEREINHEIT FÜR EINE FESTSTELLBREMSEINRICHTUNG DES FAHRZEUGS SOWIE FESTSTELLBREMSEINRICHTUNG, BREMSANLAGE UND FAHRZEUG DAMIT**
METHOD FOR OPERATING A VEHICLE HAVING AN AUTONOMOUS DRIVING MODE, CONTROL UNIT FOR A PARKING BRAKE DEVICE OF THE MOTOR VEHICLE AND PARKING BRAKE DEVICE, BRAKING SYSTEM AND VEHICLE HAVING SAID SYSTEM
PROCÉDÉ POUR UTILISER UN VÉHICULE PRÉSENTANT UN MODE DE CONDUITE AUTONOME, UNITÉ DE COMMANDE POUR UN DISPOSITIF DE FREIN DE STATIONNEMENT DU VÉHICULE, AINSI QUE DISPOSITIF DE FREIN DE STATIONNEMENT, INSTALLATION DE FREINAGE ET VÉHICULE QUI EN EST ÉQUIPÉ

(30) Priorität: 21.12.2012 DE 102012025400
(43) Veröffentlichungstag der Anmeldung: 28.10.2015
(73) Patentinhaber: WABCO GmbH, 30453 Hannover (DE)
(72) Erfinder: LÜLFING, Ralph-Carsten, 30826 Garbsen (DE); STRACHE, Wolfgang, 30966 Hemmingen (DE)
(74) Vertreter: Lauerwald, Jörg
(86) Internationale Anmeldenummer: PCT/EP2013/003346
(87) Internationale Veröffentlichungsnummer: WO 2014/094936

(56) Entgegenhaltungen:
- EP-A1- 1 504 975
- EP-A1- 2 055 541
- WO-A2-03/029060

## Beschreibung

Die Erfindung betrifft ein Verfahren zum Betreiben eines einen autonomen Fahrmodus aufweisenden Fahrzeugs gemäß dem Oberbegriff des Anspruchs 1. Weiter betrifft die Erfindung eine Steuereinheit für eine Feststellbremseinrichtung eines einen autonomen Fahrmodus aufweisenden Fahrzeugs gemäß dem Oberbegriff des Anspruchs 8. Ferner betrifft die Erfindung eine Feststellbremseinrichtung gemäß dem Oberbegriff des Anspruchs 12, eine Bremsanlage gemäß dem Oberbegriff des Anspruchs 13 und ein Fahrzeug gemäß dem Oberbegriff des Anspruchs 14. Ein erstes bekanntes Fahrzeug auf Basis eines herkömmlichen PKWs, das einen autonomen Fahrmodus aufweist, umfasst eine hydraulisch betriebene Bremsanlage mit einer Betriebsbremse und einer Feststellbremse. Die Betriebsbremse dient zum Abbremsen des Fahrzeugs. Mittels der Feststellbremse wird das abgestellte Fahrzeug festgestellt.
Ferner ist ein von einem Fahrer gesteuertes zweites Fahrzeug mit einer pneumatisch betriebenen Bremsanlage, bspw. in Form eines herkömmlichen LKWs, bekannt. Die Bremsanlage dieses zweiten bekannten Fahrzeugs stellt eine Betriebsbremsfunktion und eine Feststellbremsfunktion bereit, die mittels einer Steuereinheit gesteuert wird. Zum Betätigen der Feststellbremsfunktion des zweiten Fahrzeugs wird Druckluft als Druckmittel mittels einer Feststellbremseinrichtung vom Federspeicherteil eines Federspeicherbremszylinders zur Umgebung entlüftet bzw. der Federspeicherteil mit einer Drucksenke druckübertragend verbunden. Dadurch wird der Federspeicherbremszylinder pneumatisch betätigt und das Fahrzeug festgestellt.
Bei dem ersten bekannten Fahrzeug oder bei anderen bekannten Kraftfahrzeugen, die autonom oder in einem autonomen Fahrmodus betrieben werden, wird die Betriebsbremse elektrohydraulisch betätigt. Bei einem Stromausfall oder einem anderen Defekt steht jedoch keine elektrohydraulisch veranlasste Bremswirkung zur Verfügung. Daher muss in der Regel ein Fahrer die Fahrt überwachen, auch wenn das Fahrzeug sich in einem autonomen Fahrmodus selbsttätig steuert und fortbewegt. Ohne einen Fahrer, der im Notfall eingreifen könnte, könnte ein Stromausfall oder ein anderer Defekt während der Fortbewegung des Fahrzeugs im autonomen Fahrmodus zu gefährlichen Situationen im Straßenverkehr führen. Insbesondere könnte das Fahrzeug durch eine Fahrbahnneigung unkontrolliert beschleunigen und dabei ggf. auch seine Spur verlassen. Bekannte Fahrzeuge mit druckmittelbetriebener Bremsanlagen weisen daher Sicherheitsmängel im autonomen Fahrmodus ohne Kontrolle durch einen Fahrer auf

Ein gattungsgemäßes Verfahren zum Betreiben eines in einem autonomen Fahrmodus betreibbaren Fahrzeugs ist aus der WO 03/029060 A2 bekannt.

Die EP 2 055 541 A1 offenbart eine Steuereinheit für eine Feststellbremseinrichtung eines Fahrzeugs, die eine autonome Notbremsung im Falle eines Stromausfalls bereitstellt.

Der Erfindung liegt daher die Aufgabe zugrunde, die Sicherheit beim Betreiben eines autonomen Fahrzeugs mit einer druckmittelbetriebenen Bremsanlage in einem autonomen Fahrmodus zu erhöhen.
Die Erfindung löst diese Aufgabe mit einem Verfahren nach Anspruch 1, mit einer Steuereinheit nach Anspruch 8, mit einer Feststellbremseinrichtung nach Anspruch 12, mit einer Bremsanlage nach Anspruch 13 und mit einem Fahrzeug nach Anspruch 14.

Das erfindungsgemäße Fahrzeug kann in einem autonomen Fahrmodus betrieben werden und weist die erfindungsgemäße Bremsanlage sowie Räder auf, die mittels der Bremsanlage festgestellt bzw. abgebremst werden können. Das Fahrzeug ist insbesondere ein Kraftfahrzeug bzw. ein Nutzfahrzeug, an welches vorzugsweise ein Anhänger gekoppelt werden kann. Anhängerbremsen können vorzugsweise ebenfalls mittels der erfindungsgemäßen Bremsanlage betätigt werden.
Die erfindungsgemäße Bremsanlage für das Fahrzeug weist die erfindungsgemäße Feststellbremseinrichtung und vorzugsweise eine Betriebsbremseinrichtung auf. Die Betriebsbremseinrichtung dient zum Abbremsen des fahrenden Fahrzeugs bis zum Stillstand. Mittels der Feststellbremseinrichtung wird wenigstens ein Federspeicherbremszylinder der Bremsanlage angesteuert. Der Federspeicherbremszylinder ist einem Rad des Fahrzeugs derart zugeordnet, dass mittels des Federspeicherbremszylinders eine Bremswirkung am Rad erzielt werden kann. Hierzu wird ein pneumatischer oder hydraulischer Druck in einem Federspeicherteil des Federspeicherbremszylinders verringert, so dass eine Feder im Federspeicherbremszylinder Bremsbeläge am Rad zuspannt und somit eine Bremswirkung erzielt. Zum Zuspannen des Federspeicherbremszylinders wird Druckmittel über eine Druckmittelleitung zur erfindungsgemäßen Feststellbremseinrichtung abgelassen. Als Druckmittel ist vorzugsweise Druckluft vorgesehen, wobei die erfindungsgemäße Bremsanlage eine Druckluftbremsanlage ist. Alternativ ist als Druckmittel eine Hydraulikflüssigkeit vorgesehen, wobei die Bremsanlage eine hydraulische Bremsanlage ist.

Gemäß einer weiteren alternativen Ausbildung der Erfindung weist die Bremsanlage sowohl Druckluft als auch eine Hydraulikflüssigkeit als Druckmittel in Kombination miteinander auf. Insbesondere ist die Bremsanlage als sog. "air over hydraulic" (AOH)-Bremsanlage ausgebildet. Dabei wird ein Bremssignal zunächst pneumatisch generiert. Bremsenergie wird ebenfalls pneumatisch bereitgestellt, nämlich mittels in einem Druckspeicher gespeicherter und aus diesem Druckspeicher bereitgestellter Druckluft. Eine Weiterleitung des Bremssignals, insbesondere zum Federspeicherbremszylinder, erfolgt dann zumindest teilweise hydraulisch.

Die erfindungsgemäße Feststellbremseinrichtung weist einen ersten Ausgang auf, der mit dem Federspeicherteil des Federspeicherbremszylinders druckübertragend verbindbar bzw. bei der Bremsanlage verbunden ist. Weiter weist die Feststellbremseinrichtung eine Ventileinheit sowie die erfindungsgemäße Steuereinheit zur Ansteuerung der Ventileinheit auf. Die Ventileinheit umfasst insbesondere mehrere geeignet verschaltete Elektromagnetventile, die elektrisch mittels der Steuereinheit geschaltet werden können, um den ersten Ausgang entweder mit einer Druckquelle zu verbinden und gegen eine Drucksenke abzusperren oder mit der Drucksenke zu verbinden und gegen die Druckquelle abzusperren oder optional sowohl gegen die Druckquelle als auch gegen die Drucksenke abzusperren. Wenn das Druckmittel Druckluft ist, ist die Druckquelle ein Druckluftvorratsbehälter bzw. ein Kompressor und die Drucksenke eine Entlüftung zur Umgebung.

Die erfindungsgemäße Steuereinheit ist zur Ansteuerung der Ventileinheit der Feststellbremseinrichtung derart ausgebildet, um den ersten Ausgang der Feststellbremseinrichtung im regulären Fahrbetrieb des Fahrzeugs gegen die Drucksenke abzusperren. Während des regulären Fahrbetriebs bleibt der Federspeicherteil somit mit Druck beaufschlagt bzw. belüftet, so dass der jeweils zugeordnete Bremszylinder die Bremsbeläge am zugeordneten Rad nicht zuspannt und somit keine Bremswirkung mittels des Federspeicherbremszylinders erzielt wird.

Unter einem regulären Fahrbetrieb ist dabei ein Zustand zu verstehen, in dem das Fahrzeug fährt bzw. sich fortbewegt mit einer Geschwindigkeit, die mindestens 2 km/h, bevorzugt mindestens 4 km/h, besonders bevorzugt mindestens 6 km/h oder mindestens 8 km/h oder mindestens 10 km/h, beträgt.

Gemäß dem erfindungsgemäßen Verfahren steuert die Steuereinheit die Ventileinheit tatsächlich derart an, um den Federspeicherteil im regulären Fahrbetrieb des Fahrzeugs gegen die Drucksenke abzusperren.

Erfindungsgemäß weist die erfindungsgemäße Steuereinheit eine Steuerschaltung auf, die gemäß dem erfindungsgemäßen Verfahren die Ventileinheit derart ansteuert, dass in Erwiderung auf einen Stromausfall an der Feststellbremseinrichtung im regulären Fahrbetrieb im autonomen Fahrmodus der erste Ausgang durch automatisches Umschalten eines monostabilen Absperrventils mit der Drucksenke druckübertragend verbunden wird, um den Federspeicherbremszylinder, insbesondere als Ersatz für eine ausgefallene Betriebsbremse oder zusätzlich zu einer beeinträchtigten Betriebsbremse, zum Abbremsen des Fahrzeugs zu betätigen. Das Absperrventil ist insbesondere ein Elektromagnetventil.

Die Erfindung sichert die Betriebsbremse bzw. eine Betriebsbremsfunktion im autonomen Fahrmodus mittels der eigentlich für die Feststellbremse bzw. Feststellbremsfunktion vorgesehen Feststellbremseinrichtung und des Federspeicherbremszylinders ab. Dank der Erfindung kann somit eine Bremswirkung erzielt werden, auch wenn die zumindest im autonomen Fahrmodus elektropneumatisch bzw. elektrohydraulisch bereitgestellte Betriebsbremsfunktion bei einem Stromausfall versagt. Auch bei anderen schwerwiegenden Fehlern, die zum Ausfall der Betriebsbremsfunktion oder zu einer verminderten Bremswirkung mittels der Betriebsbremsfunktion führen, sichert die Erfindung vorteilhafterweise die Bremswirkung ab. Das Fahrzeug kann somit nicht unkontrolliert beschleunigen bzw. rückwärts rollen. Eine ausreichende Bremswirkung wird immer erzielt.

Vorteilhafterweise werden mehrere Federspeicherbremszylinder des Fahrzeugs über den ersten Ausgang der Feststellbremseinrichtung angesteuert. Diese Federspeicherbremszylinder sind vorzugsweise der Hinterachse sowie alternativ oder zusätzlich der Vorderachse des Fahrzeugs zugeordnet. Ggf. können somit alle Räder des Fahrzeugs gemeinsam mittels der Feststellbremseinrichtung zur Absicherung der Bremswirkung bei einem Stromausfall oder einem anderen schwerwiegenden Fehler betätigt werden. Zusätzlich werden vorteilhafterweise auch Bremsen eines ggf. angekoppelten Anhängers über einen zweiten Ausgang der Feststellbremseinrichtung angesteuert.

Das Fahrzeug kann vorteilhafterweise nicht nur im autonomen Fahrmodus, sonders alternativ auch in einem weiteren Fahrmodus, insbesondere in einem manuellen Fahrmodus betrieben werden. Im manuellen Fahrmodus wird das Fahrzeug von einem Fahrer gesteuert. Das Fahrzeug kann somit auf übliche Weise im Straßenverkehr bewegt und bspw. zu einer Wanderbaustelle gefahren werden, wo es in den autonomen Fahrmodus versetzt wird, um dort autonom seine Fahrt zur Absicherung der Wanderbaustelle fortzusetzen. Alternativ ist das Fahrzeug jedoch ein autonomes Fahrzeug, welches ausschließlich im autonomen Fahrmodus betrieben werden kann.

Gemäß einer bevorzugten Ausführungsform der Erfindung kann die Steuerschaltung in einem autonomen Betriebsmodus, der dem autonomen Fahrmodus des Fahrzeugs zugeordnet ist, und alternativ in einem manuellen Betriebsmodus, der dem manuellen Fahrmodus des Fahrzeugs zugeordnet ist, betrieben werden. Gemäß dieser Ausführungsform steuert die Steuerschaltung die Ventileinheit im regulären Fahrbetrieb im autonomen Betriebsmodus gegenüber dem manuellen Betriebsmodus auf derart unterschiedliche Weise an, dass in Erwiderung auf einen Stromausfall an der Feststellbremseinrichtung im regulären Fahrbetrieb im manuellen Betriebsmodus der erste Ausgang gegen die Drucksenke abgesperrt bleibt und im autonomen Betriebsmodus der erste Ausgang mit der Drucksenke verbunden wird. Die Absicherung der Bremswirkung auf die erfindungsgemäße Weise erfolgt somit lediglich im autonomen Fahrbetrieb nicht jedoch im manuellen Fahrbetrieb, so dass der Fahrer bei einem Stromausfall nicht durch eine plötzlich eintretende Bremswirkung bzw. Vollbremsung überrascht wird, sondern selbst manuell eine Bremsung einleiten kann.

Erfindungsgemäß weist die Steuereinheit eine Eingangsschaltung und eine Wechselschaltung auf, wobei die Eingangsschaltung ermittelt, ob sich das Fahrzeug im manuellen Fahrmodus oder im autonomen Fahrmodus befindet, und wobei die Wechselschaltung automatisch zwischen dem manuellen Betriebsmodus der Steuereinheit bei ermitteltem manuellen Fahrmodus und dem autonomen Betriebsmodus der Steuereinheit bei ermitteltem autonomen Fahrmodus umschaltet. Somit wird die unterschiedliche Ansteuerung der Ventileinheit im autonomen Fahrmodus gegenüber dem manuellen Fahrmodus sichergestellt.
Bei einem Stromausfall im autonomen Fahrmodus wird automatisch das Absperrventil stromlos geschaltet, wobei das Absperrventil seinen Schaltzustand ändert. Um ein entsprechendes Ändern des Schaltzustands des Absperrventils auch im Falle einer anderen erkannten Fehlfunktion zu erreichen, schaltet die Steuerschaltung gemäß einer bevorzugten Ausführungsform im Falle einer erkannten Fehlfunktion, insbesondere eines erkannten Defekts der Betriebsbremse bzw. Betriebsbremsfunktion, des Fahrzeugs eine Ansteuerung zum Absperrventil stromlos. Die Bremswirkung wird somit auch auf die erfindungsgemäße Weise abgesichert, wenn die Feststellbremseinrichtung zwar mit Strom versorgt wird, mittels der Betriebsbremsfunktion jedoch aufgrund eines anderen Defekts dennoch keine oder nur eine verminderte Bremswirkung erbracht werden kann.
Gemäß einer bevorzugten Ausführungsform der Erfindung weist die Ventileinheit in Reihe angeordnet ein bistabiles Ventil, insbesondere ein bistabiles Elektromagnetventil, eine Verbindungsleitung, das Absperrventil und eine Steuerdruckleitung auf. Die Steuerdruckleitung stellt den Steuerdruck für den ersten Ausgang bereit. Entweder ist die Steuerdruckleitung direkt druckverbindend mit dem ersten Ausgang verbunden. Alternativ und bevorzugt ist jedoch ein Relaisventil zwischengeschaltet, welches den in der Steuerdruckleitung ausgesteuerten Druck am ersten Ausgang mit einer größeren Druckmittelmenge bereitstellt.

Das bistabile Ventil verbindet die Verbindungsleitung in einem ersten Schaltzustand druckübertragend mit der o. g. oder einer anderen Drucksenke und sperrt die Verbindungsleitung gegen die o. g. oder eine andere Druckquelle ab. In einem zweiten Schaltzustand verbindet das bistabile Ventil die Verbindungsleitung druckübertragend mit dieser Druckquelle und sperrt die Verbindungsleitung gegen diese Drucksenke ab. Das bistabile Ventil wird elektromagnetisch betätigt bzw. zwischen seinen Schaltzuständen umgeschaltet und verharrt auch unbestromt in seinem jeweils eingenommenen Schaltzustand. Dank des bistabilen Ventils ist es daher möglich, die Verbindungsleitung, insbesondere im regulären Fahrbetrieb, entweder dauerhaft zu belüften oder dauerhaft zu entlüften, ohne das bistabile Ventil hierfür dauerhaft bestromen zu müssen. Insbesondere ist das bistabile Ventil im regulären Fahrbetrieb zumindest im autonomen Fahrmodus mit der Drucksenke verbunden.

Das Absperrventil weist einen ersten Schaltzustand auf, den das Absperrventil unbestromt mittels der Kraft einer Feder einnimmt, und in dem das Absperrventil die Verbindungsleitung druckübertragend mit der Steuerdruckleitung verbindet. Somit ist mittels der Kraft der Feder die Entlüftung bzw. der Druckabbau in der Steuerdruckleitung bei einem Stromausfall durch die Verbindungsleitung und das mit der Drucksenke verbundene Absperrventil sichergestellt. Das Absperrventil weist ferner einen zweiten Schaltzustand auf, den das Absperrventil bestromt einnimmt, und in dem das Absperrventil die Verbindungsleitung gegen die Steuerdruckleitung absperrt. Im regulären Fahrbetrieb im autonomen Fahrmodus, wenn also die Verbindungsleitung durch das bistabile Ventil mit der Drucksenke verbunden ist, muss das Absperrventil somit dauerhaft bestromt werden, damit die Steuerdruckleitung nicht entlüftet bzw. der Druck in der Steuerdruckleitung nicht abgebaut wird. Die Feststellbremseinrichtung ist somit zur Absicherung der Bremswirkung scharf gestellt. Im regulären Fahrbetrieb im manuellen Fahrmodus ist das Absperrventil hingegen vorteilhafterweise unbestromt, wobei das bistabile Ventil die Verbindungsleitung mit der Druckquelle verbindet. Dank des bistabilen Ventils muss auch im regulären Fahrbetrieb im manuellen Fahrmodus somit weder das bistabile Ventil noch das Absperrventil bestromt zu werden.

Gemäß einer vorteilhaften Ausführungsform der Erfindung weist die Steuereinheit ein drittes Ventil, insbesondere monostabiles Elektromagnetventil, auf, welches unbestromt mittels der Kraft einer Feder einen ersten Schaltzustand einnimmt, in dem ein mit einem Anhängersteuerventil verbundener oder verbindbarer zweiter Ausgang mit dem ersten Ausgang oder mit der Steuerdruckleitung oder mit der Verbindungsleitung druckübertragend verbunden ist und/oder zumindest gegen die Druckquelle abgesperrt ist. Im Falle eines Stromausfalles oder bevorzugt auch im Falle einer anderen erkannten Fehlfunktion, insbesondere eines erkannten Defekts der Betriebsbremsfunktion, wird im regulären Fahrbetrieb im autonomen Betriebsmodus somit auch der zweite Ausgang mit der o. g. oder einer anderen Drucksenke verbunden und/oder zumindest gegen die Druckquelle abgesperrt. Folglich werden auch Bremsen des Anhängers betätigt oder zumindest nicht gelöst. Dabei ist dem zweiten Ausgang vorteilhafterweise ein Schaltventil mit einer invertierenden Schaltfunktion nachgeschaltet, welches im Falle eines Druckabfalls am zweiten Ausgang den Druck an Bremszylindern an Rädern des Anhängers erhöht, wobei bspw. Druckluft aus einem Druckluftvorratsbehälter am Anhänger verwendet wird.

Gemäß einer bevorzugten Ausführungsform der Erfindung ist das Fahrzeug als Absicherungsfahrzeug zum Absichern einer Wanderbaustelle in seinem autonomen Fahrmodus ausgebildet. Bspw. sind am Fahrzeug oder an einem an das Fahrzeug gekoppelten Anhänger Warnschilder und/oder Leuchtzeichen vorgesehen, die andere Verkehrsteilnehmer auf die Baustelle hinweisen. Im autonomen Fahrbetrieb wird kein Fahrer zum Steuern des Fahrzeugs benötigt. Dank der Erfindung wird der Fahrer auch nicht zum Überwachen des autonomen Fahrbetriebs benötigt, da das Fahrzeug notfalls dank der Erfindung auch bei einem Stromausfall oder anderen Fehlfunktionen sicher abgebremst wird, zum Stillstand kommt und stillstehend gehalten wird. Daher wird auch kein Fahrer dieses Fahrzeugs gefährdet, wenn andere Verkehrsteilnehmer, bspw. aus Unachtsamkeit, in das Fahrzeug hineinfahren. Die Erfindung trägt somit zur Sicherheit von Mitarbeitern an Wanderbaustellen bei.

Gemäß einer bevorzugten Ausführungsform der Erfindung weist das Fahrzeug Geschwindigkeitsregelmittel auf, welche die Geschwindigkeit des Fahrzeugs derart regeln, dass das Fahrzeug eine vorgegebene Höchstgeschwindigkeit nicht überschreitet. Die vorgegebene Höchstgeschwindigkeit beträgt bspw. maximal 20 km/h, vorzugsweise maximal 16 km/h, insbesondere zwischen 8 und 16 km/h, besonders bevorzugt 12 km/h. Eine derartige Höchstgeschwindigkeit ist insbesondere für Wanderbaustellen ausreichend. Ferner kann bei einer derartigen Höchstgeschwindigkeit das Fahrzeug mittels der Erfindung sicher zum Stillstand gebracht werden, auch wenn die Federspeicherbremszylinder so schnell einfallen, dass eine schlagartige Vollbremsung erfolgt. Gemäß einer besonderen Ausführungsform wird einer schlagartigen Einbremsung durch eine gedrosselte Entlüftung durch das bistabile Ventil entgegengewirkt. Gemäß dieser besonderen Ausführungsform ist die Geschwindigkeitsbegrenzung vorteilhaft, um das Fahrzeug trotz dieser gedrosselten Entlüftung innerhalb kurzer Zeit zum Stillstand bringen zu können.

Gemäß einer bevorzugten Ausführungsform der Erfindung weist das Fahrzeug Abstandshaltemittel auf, die den Ist-Abstand des Fahrzeugs zu einem vorausfahrenden Fahrzeug mittels Abstandssensoren ermitteln. Ferner vergleichen die Abstandshaltemittel den ermittelten Ist-Abstand mit einem vorgegebenen Soll-Abstand. Im Falle einer erkannten Abweichung des Ist-Abstands vom Soll-Abstand veranlassen die Abstandshaltemittel, dass das Fahrzeug innerhalb zulässiger Grenzen beschleunigt oder abgebremst wird, um den Ist-Abstand dem Soll-Abstand anzunähern. Die zulässigen Grenzen werden insbesondere durch die vorgegebene Höchstgeschwindigkeit und/oder durch eine maximal zulässige Beschleunigung und/oder durch eine maximal zulässige Verzögerung des Fahrzeugs und/oder durch weitere Parameter definiert.

Gemäß einer vorteilhaften Ausführungsform weist das Fahrzeug ferner Spurhaltemittel auf, welche die Ist-Lage des Fahrzeugs in Bezug auf seine Soll-Lage in einer Spur ermitteln. Die Soll-Lage ist eine vorgebbare oder im Betrieb ermittelbare Lage in der Spur. Die Spur ist durch Fahrbahnmarkierungen und/oder durch einen Fahrbahnrand und/oder durch das vorausfahrende Fahrzeug und/oder andere Parameter gegeben. Insbesondere erfasst die Erfindung optisch die Fahrbahnmarkierungen bzw. optisch oder akustisch den Fahrbahnrand, um die Spur bzw. die Ist-Lage in der Spur zu ermitteln. Die Ist-Lage und die Soll-Lage sind dabei insbesondere Positionen quer zur Fahrrichtung des Fahrzeugs. Eine Abweichung der Ist-Lage von der Soll-Lage ist insbesondere ein Querversatz in der Spur. Die Spurhaltemittel erkennen eine etwaige Abweichung der Ist-Lage von der Soll-Lage und betätigen im Falle einer derartigen erkannten Abweichung, die über einem vorgegebenen Versatzwert liegt, die Lenkung des Fahrzeugs, um die Ist-Lage der Soll-Lage anzunähern. Einer Spurabweichung des Fahrzeugs wird somit wirksam entgegengewirkt.

Gemäß einer vorteilhaften Ausführungsform der Erfindung weist das Fahrzeug Freischaltmittel auf, die das Fahrzeug gegen eine ungewollte Aktivierung des autonomen Fahrmodus absichern. Die Freischaltmittel schalten die Möglichkeit einer Aktivierung des autonomen Fahrmodus vor dieser Aktivierung frei oder aktivieren den autonomen Fahrmodus zugleich mit dem Freischalten. Vorzugsweise schalten die Freigabemittel das Fahrzeug ferner automatisch in den autonomen Fahrmodus zurück, wenn die Freigabe nicht mehr besteht.

Dank der Freischaltmittel kann der autonome Fahrmodus nur aktiviert werden, wenn dies von einer autorisierten Person gewollt ist. Die Freischaltmittel umfassen hierfür vorzugsweise Mittel, die sicherstellen, dass sich eine Person beim Freischalten im Fahrzeug befindet. Ein Fahrer des Fahrzeugs kann somit vor dem Aussteigen aus dem Fahrzeug die Möglichkeit, den autonomen Fahrmodus zu aktivieren, freischalten. Alternativ oder zusätzlich weist eine Person ihre Berechtigung zum Freischalten auf andere Weise im Fahrzeug oder außerhalb des Fahrzeugs nach, bspw. mittels einer Authentisierung bzw. Authentifizierung.

Die Freischaltmittel umfassen vorzugsweise ein mechanisches und/oder elektronisches Schloss, das mit einem entsprechenden Schlüssel zum Freischalten der Aktivierung des autonomen Fahrmodus zusammenwirkt. Alternativ oder zusätzlich umfassen die Freischaltmittel vorzugsweise Eingabemittel, bspw. Tasten oder Taster, mittels denen eine Codeeingabe zum Freischalten der Aktivierung des autonomen Fahrmodus erfolgen kann, bspw. durch gleichzeitiges Drücken der Tasten bzw. Taster oder durch Drücken der Tasten bzw. Taster in einer bestimmten Reihenfolge. Damit ist der autonome Fahrmodus wirkungsvoll abgesichert.

Gemäß einer vorteilhaften Ausführungsform der Erfindung erfolgt eine Aktivierung und/oder Deaktivierung des autonomen Fahrmodus mittels einer Fernbedienung von außerhalb des Fahrzeugs. Insbesondere kann das Fahrzeug mittels der Fernbedienung in Bewegung gesetzt und angehalten werden. Gemäß einer Weiterbildung kann die Geschwindigkeit und/oder die Spur des Fahrzeugs zeitweilig mittels Anweisung über die Fernbedienung verändert werden. Beispielsweise wird in Erwiderung auf ein Steuersignal von der Fernbedienung die Geschwindigkeit zeitweilig verringert und/oder das Fahrzeug an einem Hindernis vorbei manövriert.

Das Fahrzeug weist vorzugsweise Aktivierungsmittel auf, die in Erwiderung auf ein Aktivierungssignal den autonomen Fahrbetrieb des Fahrzeugs freischalten, insbesondere wenn das Aktivieren freigeschaltet ist. Das Aktivierungssignal wird beispielsweise von einer Empfangseinrichtung des Fahrzeugs an eine den Fahrmodus steuernde zentrale Steuereinrichtung des Fahrzeugs übermittelt. Insbesondere sendet die Fernbedienung Signale an die Empfangseinrichtung, die in Erwiderung darauf das Aktivierungssignal an die zentrale Steuereinrichtung sendet. Vorzugsweise werden die Signale von der Fernbedienung drahtlos, insbesondere über Funk, an das Fahrzeug bzw. an die Empfangseinrichtung übertragen.

Besonders vorteilhaft ist die Aktivierung bzw. Deaktivierung des autonomen Fahrmodus mittels der Fernbedienung bzw. über Funk von außerhalb des Fahrzeugs, wenn das Fahrzeug ein Absicherungsfahrzeug für eine Wanderbaustelle oder ein anderes Fahrzeug ist, das im autonomen Fahrmodus ohne einen Fahrer bzw. ohne eine die Fahrt überwachende Person im Fahrzeug betrieben wird.

Das erfindungsgemäße Fahrzeug weist vorzugsweise Mittel zur Durchführung des erfindungsgemäßen Verfahrens bzw. von in der Beschreibung und/oder in den Ansprüchen genannten Verfahrensmerkmalen auf. Insbesondere ist das Fahrzeug zur Durchführung des erfindungsgemäßen Verfahrens bzw. von in der Beschreibung und/oder in den Ansprüchen genannten Verfahrensmerkmalen ausgebildet.
Weitere Ausführungsformen der Erfindung ergeben sich aus den Ansprüchen sowie aus den anhand der Zeichnung näher erläuterten Ausführungsbeispielen. In der Zeichnung zeigen:
- Fig. 1: Teile einer Bremsanlage mit einer eine Steuereinheit aufweisenden Feststellbremseinrichtung gemäß einem ersten Ausführungsbeispiel der Erfindung;
- Fig. 2: Teile einer Bremsanlage mit einer eine Steuereinheit aufweisenden Feststellbremseinrichtung gemäß einem zweiten Ausführungsbeispiel der Erfindung;
- Fig. 3: ein Diagramm zur Veranschaulichung des Verfahrens gemäß einem Ausführungsbeispiel der Erfindung und
- Fig. 4: ein Fahrzeug in vereinfachter Blockdarstellung gemäß einem Ausführungsbeispiel der Erfindung.

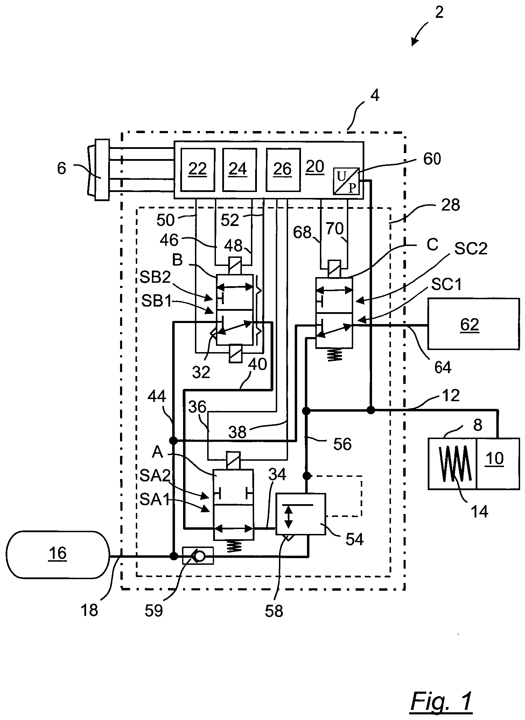

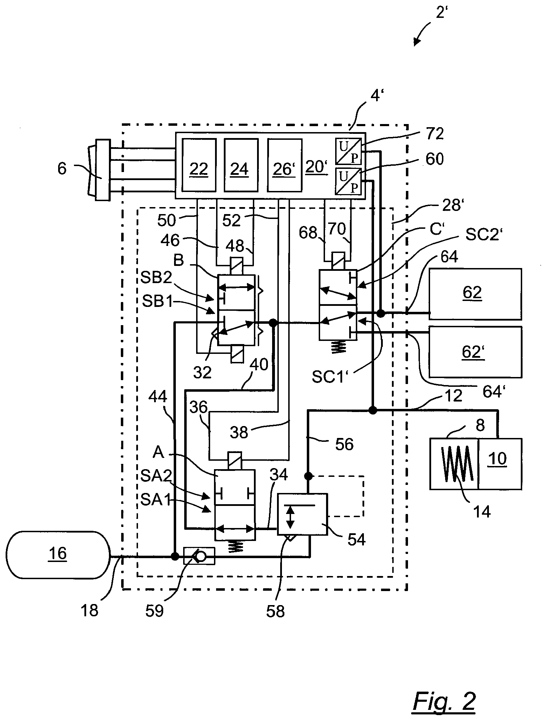

Fig. 1 und Fig. 2 zeigen jeweils Teile einer Bremsanlage 2 bzw. 2' gemäß einem ersten bzw. zweiten Ausführungsbeispiel der Erfindung. Gleiche Bezugszeichen in den Fig. 1 und 2 bezeichnen gleiche Teile. Teile aus Fig. 2, die Teilen aus Fig. 1 entsprechen bzw. funktionsgleich oder funktionsähnlich zu Teilen aus Fig. 1 sind, sind in Fig. 2 mit derselben Ziffer wie in Fig. 1, jedoch ergänzt um einen Hochstrich, gekennzeichnet. Die folgenden Ausführungen zum Ausführungsbeispiel gemäß Fig. 1 beziehen sich zunächst auch auf das Ausführungsbeispiel gemäß Fig. 2 mit denselben bzw. um den Hochstrich ergänzten Bezugszeichen. Unterschiede zwischen den Ausführungsbeispielen gemäß Fig. 1 und Fig. 2 treten lediglich aufgrund unterschiedlicher Ansteuerung eines Anhängersteuerventils bzw. von Bremsen eines Anhängers auf, der optional an ein die Bremsanlage 2 aufweisendes Fahrzeug gekoppelt werden kann.

Das Fahrzeug ist insbesondere ein Absicherungsfahrzeug für eine Wanderbaustelle und kann in einem autonomen Fahrmodus betrieben werden. Alternativ kann das Fahrzeug jedoch auch ein anderes in einem autonomen Fahrmodus betreibbares oder autonomes Fahrzeug sein. Das Fahrzeug ist vorzugsweise ein Straßenfahrzeug, ferner vorzugsweise ein Kraftfahrzeug, insbesondere mit einem Verbrennungsmotor, und ferner insbesondere ein Nutzfahrzeug. Weiter weist das Fahrzeug Räder auf, die mittels der Bremsanlage 2 abgebremst bzw. festgestellt werden können. Hierzu weist die Bremsanlage 2 eine Betriebsbremsfunktion und eine Feststellbremsfunktion auf.

Die Bremsanlage 2 ist eine druckluftbetriebene bzw. pneumatisch betriebene Bremsanlage, die Druckluft als Druckmittel verwendet. Alternativ zu den gezeigten Ausführungsbeispielen ist die Bremsanlage 2 jedoch eine andere druckmittelbetriebene Bremsanlage, insbesondere eine hydraulisch betriebene Bremsanlage, die als Druckmittel eine Hydraulikflüssigkeit, insbesondere ein Hydrauliköl, verwendet, oder eine Bremsanlage, in der pneumatische und hydraulische Teile miteinander kombiniert sind.

Die Betriebsbremsfunktion wird elektropneumatisch bzw. elektrohydraulisch bereitgestellt. Ein Betriebsbremsdruck zum Betätigen von Bremszylindern an den Rädern des Fahrzeugs wird dabei zumindest in einem autonomen Fahrmodus des Fahrzeugs elektropneumatisch bzw. elektrohydraulisch mittels einer Ventileinrichtung ausgesteuert. Bei einem Stromausfall ist ein derartiges Aussteuern eines Betriebsbremsdrucks nicht möglich, so dass das Fahrzeug mittels seiner Betriebsbremsfunktion nicht automatisch, sondern allenfalls manuell mittels eines Fahrers des Fahrzeugs abgebremst werden kann.

Die Bremsanlage 2 weist eine Feststellbremseinrichtung 4 auf, mittels der das Fahrzeug elektropneumatisch festgestellt werden kann. Zum Aktivieren bzw. Deaktivieren der Feststellbremsfunktion ist ein Betätigungselement 6 vorgesehen, das vorzugsweise in einer Fahrerkabine des Fahrzeugs angeordnet ist.

Die Bremsanlage 2 weist einen Federspeicherbremszylinder 8 mit einem Federspeicherteil 10 auf, der mit einem ersten Ausgang 12 der Feststellbremseinrichtung 4 pneumatisch verbunden ist, um einen Bremsbelag an einem Rad des Fahrzeugs mittels Druckluft im Federspeicherteil 10 gegen die Kraft einer Feder 14 des Federspeicherbremszylinders 8 zu lösen bzw. um durch Entlüften des Federspeicherteils 10 mittels der Kraft der Feder 14 die Bremsbeläge am Rad zuzuspannen. Der Federspeicherbremszylinder 8 ist exemplarisch für mehrere den Rädern des Fahrzeugs zugeordnete Federspeicherbremszylinder dargestellt, die alle pneumatisch mit dem ersten Ausgang 12 verbunden sind. Insbesondere sind an Rädern wenigstens einer Hinterachse des Fahrzeugs sowie vorteilhafterweise auch an Rädern wenigstens einer Vorderachse des Fahrzeugs entsprechende Federspeicherbremszylinder vorgesehen.

Die Feststellbremseinrichtung 4 wird von einer mittels eines Druckluftvorratsbehälters gegebenen Druckquelle 16 über einen Eingang 18 mit Druckluft versorgt. Der Druckquelle 16 bzw. dem Druckluftvorratsbehälter wird Druckluft mittels eines Kompressors des Fahrzeugs zugeführt, der ggf. weitere Einrichtungen des Fahrzeugs mit Druckluft versorgt.

Die Feststellbremseinrichtung 4 weist eine Steuereinheit 20 auf, der Signale von einem nicht dargestellten weiteren Betätigungselement oder einer nicht dargestellten Steuereinheit der Bremsanlage bspw. über einen CAN-Bus zugeleitet werden. In diesen Signalen ist die Information enthalten, ob sich das Fahrzeug in einem manuellen Fahrmodus oder im autonomen Fahrmodus befindet bzw. ob die Steuereinheit 20 in einem manuellen oder autonomen Betriebsmodus betrieben werden soll. Die Steuereinheit 20 weist eine Eingangsschaltung 22 auf, die anhand dieser Signale ermittelt, ob sich das Fahrzeug im manuellen Fahrmodus oder im autonomen Fahrmodus befindet bzw. die Steuereinheit 20 in den manuellen oder autonomen Betriebsmodus versetzt oder im jeweiligen Betriebsmodus betrieben werden soll. Weiter weist die Steuereinheit 20 eine Wechselschaltung 24 auf, die in Erwiderung auf ein ermitteltes Umschalten vom manuellen Fahrmodus in den autonomen Fahrmodus bzw. in Erwiderung auf die empfangenen Signale die Steuereinheit 20 vom manuellen Betriebsmodus in den autonomen Betriebsmodus versetzt. Umgekehrt versetzt die Wechselschaltung 24 die Steuereinheit 20 vom autonomen Betriebsmodus in den manuellen Betriebsmodus, wenn die Eingangsschaltung ermittelt, dass das Fahrzeug vom autonomen Fahrmodus in den manuellen Fahrmodus versetzt worden ist bzw. entsprechende Signale empfängt.

Weiter weist die Steuereinheit 20 eine Steuerschaltung 26 auf, welche eine Ventileinheit 28 der Feststellbremseinrichtung 4 ansteuert. Dabei ist die Steuerschaltung 26 derart ausgebildet, dass sie die Ventileinheit 28 im manuellen Betriebsmodus auf eine erste Weise und im autonomen Betriebsmodus auf eine davon abweichende zweite Weise ansteuert.

Im autonomen Fahrmodus bzw. im autonomen Betriebsmodus der Steuereinheit 20 steuert die Steuerschaltung 26 die Ventileinheit 28 derart an, dass in Erwiderung auf einen Stromausfall an der Feststellbremseinrichtung 4 im regulären Fahrbetrieb der erste Ausgang 12 durch automatisches Umschalten eines monostabilen Absperrventils A der Ventileinheit 28 von einem zweiten Schaltzustand SA2 in einen ersten Schaltzustand SA1 mit einer als Entlüftung zur Umgebung ausgebildeten Drucksenke 32 druckübertragend bzw. pneumatisch verbunden wird, um den Federspeicherbremszylinder 8 ersatzweise für die Betriebsbremsfunktion zum Abbremsen des Fahrzeugs zu betätigen. Das Absperrventil A ist ein 2/2-Wege-Ventil. Die Feststellbremsfunktion als Ersatz für die Betriebsbremsfunktion mittels des Federspeicherbremszylinders 8 ist hierbei mittels Einnehmen der zweiten Schaltstellung des monostabilen Absperrventils A im regulären Fahrbetrieb im autonomen Fahrmodus scharf geschaltet, da das Absperrventil A dauerhaft bestromt werden muss, um den zweiten Schaltzustand SA2 aufrecht zu erhalten und damit eine Steuerdruckleitung 34, die den Druck am ersten Ausgang 12 vorgibt, gegen die Drucksenke 32 abzusperren. Insbesondere nimmt das Absperrventil A im zweiten Schaltzustand SA2 gegen die Kraft einer Feder eine Sperrstellung ein, wobei ein Magnetanker des Absperrventils A über elektrische Leitungen 36 und 38 von der Steuereinheit 20 angesteuert bzw. bestromt wird.

Bei einem Stromausfall ist daher die Ansteuerung des Absperrventils A mittels der elektrischen Leitungen 36 und 38 stromlos, so dass das monostabile Absperrventil A daher mittels der Kraft seiner Feder seinen ersten Schaltzustand SA1 und damit eine Durchgangsstellung einnimmt, welche die Steuerdruckleitung 34 pneumatisch mit einer Verbindungsleitung 40 verbindet. Eine Druckminderung bzw. Entlüftung zur Drucksenke 32 erfolgt von der Verbindungsleitung 40 durch ein bistabiles Ventil B, welches als Doppelankermagnetventil ausgebildet ist. Das bistabile Ventil B ist ein 3/2-Wege-Ventil, welches in einem ersten, dargestellten Schaltzustand SB1 die Verbindungsleitung 40 mit der Drucksenke 32 verbindet und in einem zweiten Schaltzustand SB2 die Verbindungsleitung 40 durch eine Eingangsleitung 44 mit dem Eingang 18 bzw. mit der Druckquelle 16 pneumatisch verbindet.

Die Magnetanker des bistabilen Ventils B werden über elektrische Leitungen 46 und 48 bzw. 50 und 52 angesteuert bzw. bestromt. Zum Umschalten zwischen einem ersten Schaltzustand SB1 und einem zweiten Schaltzustand SB2 des bistabilen Ventils B wird jeweils einer der Magnetanker bestromt. Zum Halten des jeweiligen Schaltzustands SB1 bzw. SB2 braucht keiner der Magnetanker bestromt zu werden. Im autonomen Fahrmodus bzw. im autonomen Betriebsmodus der Steuereinheit 20 wird daher, wenn bzw. sobald ein ausreichender Druck in der Steuerdruckleitung 34 vorliegt, das Absperrventil A in seinen zweiten Schaltzustand SA2, also den Sperrzustand bzw. Halten-Zustand versetzt, um diesen ausgesteuerten Druck in der Steuerdruckleitung 34 zu halten und zugleich bzw. daraufhin das bistabile Ventil B in seinen ersten Schaltzustand SB1 versetzt, in welchem die Verbindungsleitung 40 mit der Drucksenke 32 verbunden ist.

Alternativ zum dargestellten Ausführungsbeispiel ist das bistabile Ventil B mit lediglich einem Magnetanker ausgebildet, wobei durch unterschiedlich gerichtete Bestromung des Magnetankers zwischen den Schaltzuständen SB1 und SB2 umgeschaltet werden kann.

Die Ventileinheit 28 weist ein Relaisventil 54 auf, welches als Steuerdruck den Druck in der Steuerdruckleitung 34 erhält und diesen Steuerdruck druckmittelmengenverstärkt in einer zum ersten Ausgang 12 führenden Ausgangsleitung 56 bereitstellt. Das Relaisventil 54 ist mit der Drucksenke 32 bzw. mit einer Drucksenke 58 verbunden. Über ein Rückschlagventil 59 ist das Relaisventil 54 mit der Druckquelle 16 verbunden. Der in der Ausgangsleitung 56 gemäß dem Druck in der Steuerdruckleitung 34 ausgesteuerte Druck wird mittels eines ersten Drucksensors 60 gemessen und somit der Druck am ersten Ausgang 12 überwacht.

Im manuellen Fahrmodus schaltet die Steuereinheit 20 zumindest im regulären Fahrbetrieb das bistabile Ventil B in seinen zweiten Schaltzustand SB2, in dem die Verbindungsleitung 40 mit der Druckquelle 16 verbunden ist. Zugleich wird das Absperrventil A in seinem unbestromten ersten Schaltzustand SA1 gelassen, so dass die Steuerdruckleitung 34, der erste Ausgang 12 und der Federspeicherteil 10 des Federspeicherbremszylinders 8 mit dem Vorratsdruck der Druckquelle 16 beaufschlagt sind. Der Federspeicherbremszylinder 8 ist somit nicht zugespannt, wobei das bistabile Ventil B und das monostabile Absperrventil A beide nicht bestromt werden müssen, so dass ein energiesparender Fahrbetrieb möglich ist.

Die folgenden Ausführungen zur Ansteuerung eines Anhängers beziehen sich lediglich auf das erste Ausführungsbeispiel gemäß Fig. 1:
Einem Anhängersteuerventil 62 der Bremsanlage 2 wird Druckluft über einen zweiten Ausgang 64 der Feststellbremseinrichtung 4 bereitgestellt. Dem zweiten Ausgang 64 ist ein drittes Ventil C vorgeschaltet, das als monostabiles 3/2-Wege-Elektromagnetventil ausgebildet ist. In einem ersten dargestellten Schaltzustand SC1, den das dritte Ventil C mittels der Kraft einer Feder einnimmt, verbindet das dritte Ventil C den zweiten Ausgang 64 mit der Ausgangsleitung 56, so dass am zweiten Ausgang 64 derselbe Druck wie am ersten Ausgang 12 anliegt. Das Anhängersteuerventil 62 wird somit analog zum Federspeicherbremszylinder 8 angesteuert. Aufgrund der invertierenden Schaltcharakteristik des Anhängersteuerventils werden Bremsen des Anhängers nicht betätigt, wenn am zweiten Ausgang 64 ein ausreichend hoher Druck vorliegt. Zum Erhöhen des Drucks an Bremszylindern des Anhängers bzw. zum Betätigen der Bremsen des Anhängers über die Feststellbremsfunktion muss der Druck am zweiten Ausgang 64 gesenkt werden. Durch Bestromen eines Magnetankers des dritten Ventils C über elektrische Leitungen 68 und 70 kann das dritte Ventil C gegen die Kraft seiner Feder in seinen zweiten Schaltzustand SC2 versetzt werden, in welchem der zweite Ausgang 64 mit der Eingangsleitung 44 und somit mit der Druckquelle 16 verbunden ist. Dadurch können Bremsen des Anhängers kurzzeitig gelöst werden, bspw. um zu ermitteln, ob die Bremsen des Fahrzeugs in der Lage sind, das Fahrzeug zusammen mit dem Anhänger gebremst zu halten.

In Fig. 2 ist ein gegenüber dem dritten Ventil C von Fig. 1 abweichendes drittes Ventil C' bzw. anders geschaltetes Ventil C' vorgesehen, welches dem zweiten Ausgang 64 bzw. einem zusätzlich oder alternativ vorgesehenen weiteren zweiten Ausgang 64' vorgeschaltet ist. Das Anhängersteuerventil 62 ist entweder mit dem zweiten Ausgang 64 oder, dargestellt als Anhängersteuerventil 62', mit dem weiteren zweiten Ausgang 64' druckübertragend verbunden. Mittels eines Drucksensors 72 wird der Druck am zweiten Ausgang 64 gemessen. Alternativ zum dargestellten Ausführungsbeispiel misst der Drucksensor 72 den Druck am weiteren zweiten Ausgang 64'. Ggf. können auch zwei Drucksensoren zum Messen der Drücke an beiden zweiten Ausgängen 64 und 64' vorgesehen sein.

Das dritte Ventil C' verbindet in seinem ersten Schaltzustand SC1', den das dritte Ventil C' mittels der Kraft seiner Feder einnimmt, den zweiten Ausgang 64 pneumatisch mit der Verbindungsleitung 40. In seinem zweiten Schaltzustand SC2', den das dritte Ventil C' durch Bestromung seines Magnetankers gegen die Kraft seiner Feder einnimmt, ist hingegen der weitere zweite Ausgang 64' mit der Verbindungsleitung 40 druckübertragend verbunden. Der jeweils andere zweite Ausgang 64 bzw. 64' ist gegen die Verbindungsleitung 40 abgesperrt. Im Gegensatz zum ersten Ausführungsbeispiel gemäß Fig. 1 ist es gemäß dem zweiten Ausführungsbeispiel gemäß Fig. 2 möglich, den Druck am zweiten Ausgang 64 bzw. 64' zu verringern, ohne hierzu auch den Druck am ersten Ausgang 12 verringern zu müssen. Ferner kann der Druck am ersten Ausgang 12 verändert werden, ohne hierzu auch den Druck am zweiten Ausgang 64 bzw. 64' verändern zu müssen.

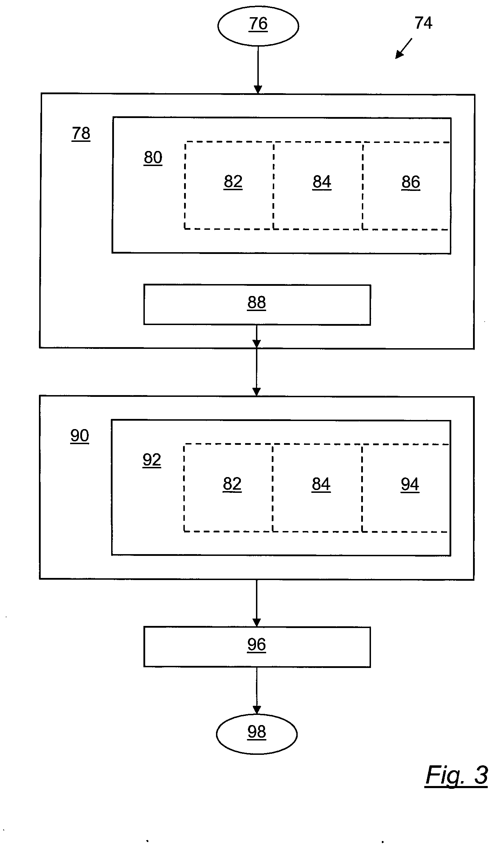

Fig. 3 zeigt ein Blockschaltbild mit Verfahrensschritten eines erfindungsgemäßen Verfahrens 74 gemäß einem Ausführungsbeispiel der Erfindung. Bei einem Start 76 der dargestellten Verfahrensschritte befindet sich das Fahrzeug, welches eine erfindungsgemäße Bremsanlage, insbesondere die Bremsanlage 2 gemäß dem ersten Ausführungsbeispiel von Fig. 1 bzw. die Bremsanlage 2' gemäß dem zweiten Ausführungsbeispiel gemäß Fig. 2, aufweist, im autonomen Fahrmodus. Ferner fährt das Fahrzeug gemäß einem Schritt 78, bspw. mit einer Geschwindigkeit von 10 km/h, und ist dabei ungebremst bzw. zumindest nicht mittels der Feststellbremseinrichtung 4,4' der Bremsanlage 2,2' gebremst. Dabei ist gemäß einem Schritt 80 der erste Ausgang 12 der Feststellbremseinrichtung 4 gegen die Drucksenke 32 bzw. 58 abgesperrt. Dies wird insbesondere durch Schritte 82, 84 und 86 erreicht. Das bistabile Ventil B verbindet die Verbindungsleitung 40 gemäß dem Schritt 82 mit der Drucksenke 32 und sperrt gemäß dem Schritt 84 die Verbindungsleitung 40 gegen die Druckquelle 16 ab. Gemäß dem Schritt 86 sperrt das Absperrventil A die Verbindungsleitung 40 gegen die Steuerdruckleitung 34 ab. Somit wird der Druck in der Steuerdruckleitung 34 sowie der Druck am ersten Ausgang 12, der mittels des Relaisventils 54 entsprechend dem Druck in der Steuerdruckleitung 34 eingestellt ist, gehalten. Die Feststellbremseinrichtung 4 ist mittels des Schritts 80 mit den Schritten 82, 84 und 86 scharf geschaltet.

Gemäß einem Schritt 88 kommt es während der Fahrt zu einem Stromausfall an der Feststellbremseinrichtung 4, während sich das Fahrzeug weiterhin im autonomen Fahrmodus befindet. In der Regel ist zugleich die Betriebsbremsfunktion des Fahrzeugs durch den Stromausfall beeinträchtigt. Daher wird gemäß einem Schritt 90 das Fahrzeug auf erfindungsgemäße Weise mittels der Feststellbremseinrichtung 4 abgebremst. Dies wird durch Verbinden des ersten Ausgangs 12 mit der Drucksenke 32 bzw. 58 gemäß einem Schritt 92 erreicht. Im Einzelnen bleibt die Verbindungsleitung 40 aufgrund der bistabilen Eigenschaften des bistabilen Ventils B gemäß dem Schritt 82 mit der Drucksenke 32 verbunden und gemäß dem Schritt 84 gegen die Druckquelle 16 abgesperrt. Das monostabile Absperrventil A schaltet jedoch in Erwiderung auf den Stromausfall bzw. auf ein Ausbleiben einer elektrischen Ansteuerung durch die elektrischen Leitungen 36 und 38 mittels der Kraft seiner Feder vom zweiten Schaltzustand SA2 in den ersten Schaltzustand SA1, so dass gemäß einem Schritt 94 das Absperrventil A die Verbindungsleitung 40 mit der Steuerdruckleitung 34 verbindet. Der Druck in der Steuerdruckleitung 34 und entsprechend der Druck am ersten Ausgang 12 wird folglich nicht mehr gehalten, sondern zur Drucksenke 32 bzw. 58 abgelassen. Insbesondere wird der Federspeicherteil 10 des Federspeicherbremszylinders 8 durch die Feststellbremseinrichtung 4 zur Umgebung entlüftet, so dass der Federspeicherbremszylinder 8 mittels seiner Federbremsbeläge an einer Bremse des Fahrzeugs zuspannt und das Fahrzeug somit abbremst. Bremsen an einem evtl. vorhandenen Anhänger werden ebenfalls betätigt oder zumindest nicht gelöst.

Nachfolgend kommt das Fahrzeug zum Stillstand und bleibt nachfolgend gemäß einem Schritt 96 festgestellt. Damit ist das Ende des Verfahrens, soweit dargestellt, gemäß einem Schritt 98 erreicht.

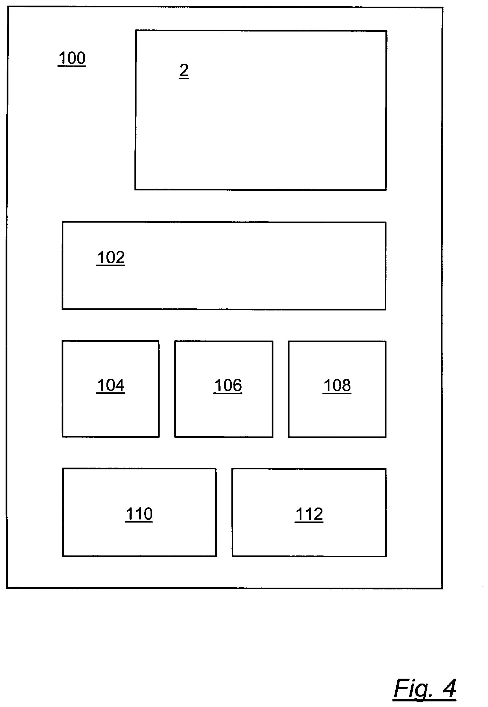

Fig. 4 zeigt in vereinfachter Blockdarstellung ein Fahrzeug 100 gemäß einem Ausführungsbeispiel der Erfindung. Das Fahrzeug 100 weist die Bremsanlage 2 des ersten Ausführungsbeispiels gemäß Fig. 1 auf. Alternativ zum gezeigten Ausführungsbeispiel weist das Fahrzeug 100 die Bremsanlage 2' des zweiten Ausführungsbeispiels gemäß Fig. 2 oder eine andere erfindungsgemäße Bremsanlage auf.

Weiter weist das Fahrzeug 100 eine zentrale Steuereinrichtung 102 auf, welche insbesondere Fahrfunktionen des Fahrzeugs 100 im manuellen Fahrmodus und im autonomen Fahrmodus steuert und die Bremsanlage 2 unterschiedlich ansteuert in Abhängigkeit davon, ob sich das Fahrzeug 100 im manuellen oder im autonomen Fahrmodus befindet. Insbesondere ist die zentrale Steuereinrichtung 102 über einen CAN-Bus mit der Bremsanlage 2, insbesondere wenigstens einer Steuereinrichtung bzw. der Steuereinheit 20 der Bremsanlage 2, signalübertragend bzw. datenübertragend verbunden.
Weiter weist das Fahrzeug 100 für die autonome Steuerung des Fahrzeugs 100 im autonomen Fahrmodus Geschwindigkeitsregelmittel 104 zum Regeln der Geschwindigkeit des Fahrzeugs 100, Abstandshaltemittel 106 zum Halten des Abstands zu einem vorausfahrenden Fahrzeug und Spurhaltemittel 108 zum Halten der Spur des Fahrzeugs 100 auf. Zum Aktivieren und zum Deaktivieren des autonomen Fahrmodus weist das Fahrzeug 100 Aktivierungsmittel 110, bspw. in Form eines Schalters oder eines Empfängers für Signale einer Fernbedienung, auf. Ferner weist das Fahrzeug Freischaltmittel 112, bspw. in Form eines Schlosses, auf, um das Aktivieren des autonomen Fahrmodus nur gewollt durch eine autorisierte Person durchführen zu lassen.
Insgesamt stellt die Erfindung ein Sicherheitssystem für ein in einem autonomen Fahrmodus betreibbares Fahrzeug über eine druckmittelbetriebene Feststellbremseinrichtung bereit. Die Erfindung ermöglicht somit ein sicheres Abbremsen und Feststellen eines Fahrzeugs, das bei seiner Fahrt im autonomen Fahrmodus durch einen Stromausfall oder einen anderen Defekt überrascht wird.

## Patentansprüche

1. Verfahren zum Betreiben eines Fahrzeugs (100), das in einem autonomen Fahrmodus betreibbar ist,
wobei
eine Steuereinheit (20, 20') einer Feststellbremseinrichtung (4, 4') des Fahrzeugs (100) eine Ventileinheit (28, 28') der Feststellbremseinrichtung (4, 4') ansteuert, um einen mit einem Federspeicherteil (10) wenigstens eines Federspeicherbremszylinders (8) des Fahrzeugs (100) druckübertragend verbundenen ersten Ausgang (12) der Feststellbremseinrichtung (4, 4') im regulären Fahrbetrieb des Fahrzeugs (100) gegen eine Drucksenke (32, 58) abzusperren,
**dadurch gekennzeichnet dass** eine Steuerschaltung (26, 26') der Steuereinheit (20, 20') die Ventileinheit (28, 28') derart ansteuert, dass in Erwiderung auf einen Stromausfall an der Feststellbremseinrichtung (4, 4') im regulären Fahrbetrieb im autonomen Fahrmodus der erste Ausgang (12) durch automatisches Umschalten eines monostabilen Absperrventils (A) mit der Drucksenke (32, 58) druckübertragend verbunden wird, um den Federspeicherbremszylinder (8) zum Abbremsen des Fahrzeugs (100) zu betätigen, wobei
- eine Eingangsschaltung (22) der Steuereinheit (20, 20') ermittelt, ob sich das Fahrzeug (100) in einem manuellen Fahrmodus oder im autonomen Fahrmodus befindet,
- eine Wechselschaltung (24) der Steuereinheit (20, 20') automatisch zwischen einem manuellen Betriebsmodus der Steuereinheit (20, 20') bei ermitteltem manuellen Fahrmodus und einem autonomen Betriebsmodus der Steuereinheit (20, 20') bei ermitteltem autonomen Fahrmodus umschaltet und
- die Steuerschaltung (26, 26') die Ventileinheit (28, 28') im regulären Fahrbetrieb im autonomen Betriebsmodus gegenüber dem manuellen Betriebsmodus auf derart unterschiedliche Weise ansteuert, das in Erwiderung auf einen Stromausfall an der Feststellbremseinrichtung (4, 4') im regulären Fahrbetrieb im manuellen Betriebsmodus der erste Ausgang (12) gegen die Drucksenke (32, 58) abgesperrt bleibt und im autonomen Betriebsmodus der erste Ausgang (12) mit der Drucksenke (32, 58) verbunden wird.

2. Verfahren nach Anspruch 1,
**dadurch gekennzeichnet, dass**
die Steuerschaltung (26, 26') im Falle einer erkannten Fehlfunktion des Fahrzeugs (100) eine Ansteuerung zum Absperrventil (A) stromlos schaltet.

3. Verfahren nach einem der vorherigen Ansprüche,
**dadurch gekennzeichnet, dass**
ein bistabiles Ventil (B) der Ventileinheit (28, 28') eine Verbindungsleitung (40) der Ventileinheit (28, 28') in einem ersten Schaltzustand (SB1) mit der Drucksenke (32) druckübertragend verbindet und gegen eine Druckquelle (16) absperrt und in einem zweiten Schaltzustand (SB2) mit der Druckquelle (16) druckübertragend verbindet und gegen die Drucksenke (32) absperrt und das Absperrventil (A) die Verbindungsleitung (40) in einem ersten Schaltzustand (SA1), den das Absperrventil (A) unbestromt mittels der Kraft einer Feder einnimmt, mit einer einen Steuerdruck für den ersten Ausgang (12) bereitstellenden Steuerdruckleitung (34) der Ventileinheit (28, 28') druckübertragend verbindet und in einem zweiten Schaltzustand (SA2), den das Absperrventil (A) bestromt einnimmt, gegen die Steuerdruckleitung (34) absperrt.

4. Verfahren nach Anspruch 3,
**dadurch gekennzeichnet, dass**
ein drittes Ventil (C; C') der Ventileinheit (28, 28') unbestromt mittels der Kraft einer Feder einen ersten Schaltzustand (SC1; SC1') einnimmt in dem ein mit einem Anhängersteuerventil (62; 62') verbindbarer zweiter Ausgang (64; 64') der Feststellbremseinrichtung (4, 4') mit dem ersten Ausgang (12) oder mit der Steuerdruckleitung (34) oder mit der Verbindungsleitung (40) druckübertragend verbunden ist und/oder gegen die Druckquelle (16) abgesperrt ist.

5. Verfahren nach einem der vorherigen Ansprüche,
**dadurch gekennzeichnet, dass**
- das Fahrzeug (100) als Absicherungsfahrzeug in seinem autonomen Fahrmodus eine Wanderbaustelle absichert,
- wobei Geschwindigkeitsregelmittel (104) des Fahrzeugs (100) dessen Geschwindigkeit derart regeln, dass das Fahrzeug (100) eine vorgegebene Höchstgeschwindigkeit nicht überschreitet, die maximal 20 km/h, vorzugsweise maximal 16 km/h, insbesondere zwischen 8 und 12 km/h, besonders bevorzugt 12 km/h, beträgt,
- wobei Abstandshaltemittel (106) des Fahrzeugs (100) mittels Abstandssensoren den Ist-Abstand des Fahrzeugs (100) zu einem vorausfahrenden Fahrzeug ermitteln, den ermittelten Ist-Abstand mit einem vorgegebenen Soll-Abstand vergleichen und im Falle einer erkannten Abweichung des Ist-Abstands vom Soll-Abstand, die über einem vorgegebenen Abstandsdifferenzwert liegt, das Fahrzeug (100) innerhalb zulässiger Grenzen beschleunigen oder abbremsen, um den Ist-Abstand dem Soll-Abstand anzunähern, und
- wobei Spurhaltemittel (108) des Fahrzeugs (100) mittels der Abstandssensoren und/oder mittels weiterer Sensoren die Ist-Lage des Fahrzeugs (100) in Bezug auf eine Soll-Lage in einer durch Fahrbahnmarkierungen und/oder durch einen Fahrbahnrand und/oder durch das vorausfahrende Fahrzeug gegebenen Spur ermitteln und im Falle einer erkannten Abweichung der Ist-Lage von der Soll-Lage, die über einem vorgegebenen Versatzwert liegt, die Lenkung des Fahrzeugs (100) betätigen, um die Ist-Lage der Soll-Lage anzunähern.

6. Verfahren nach einem der vorherigen Ansprüche,
**dadurch gekennzeichnet, dass**
Freischaltmittel (112) das Fahrzeug (100) gegen eine ungewollte Aktivierung des autonomen Fahrmodus absichern.

7. Verfahren nach einem der vorherigen Ansprüche,
**dadurch gekennzeichnet, dass**
eine Aktivierung und/oder Deaktivierung des autonomen Fahrmodus mittels einer Fernbedienung von außerhalb des Fahrzeugs (100) erfolgt.

8. Steuereinheit für eine Feststellbremseinrichtung (4, 4') eines Fahrzeugs (100), das in einem autonomen Fahrmodus betreibbar ist, wobei die Steuereinheit (4, 4') zur Ansteuerung einer Ventileinheit (28, 28') der Feststellbremseinrichtung (4, 4') derart ausgebildet ist, um einen mit einem Federspeicherteil (10) wenigstens eines Federspeicherbremszylinders (8) des Fahrzeugs (100) druckübertragend verbindbaren ersten Ausgang (12) der Feststellbremseinrichtung (4, 4') im regulären Fahrbetrieb des Fahrzeugs (100) gegen eine Drucksenke (32, 58) abzusperren, **gekennzeichnet durch**
eine Steuerschaltung (26, 26'), mittels welcher die Ventileinheit (28, 28') derart ansteuerbar ist, dass in Erwiderung auf einen Stromausfall an der Feststellbremseinrichtung (4, 4') im regulären Fahrbetrieb im autonomen Fahrmodus der erste Ausgang (12) durch automatisches Umschalten eines monostabilen Absperrventils (A) mit der Drucksenke (32, 58) druckübertragend verbunden wird, um den Federspeicherbremszylinder (8) zum Abbremsen des Fahrzeugs (100) zu betätigen, mit
- einer Eingangsschaltung (22) zum Ermitteln, ob sich das Fahrzeug (100) in einem manuellen Fahrmodus oder im autonomen Fahrmodus befindet,
- einer Wechselschaltung (24) zum autonomen Umschalten zwischen einem manuellen Betriebsmodus der Steuereinheit (20, 20') bei ermittelten manuellen Fahrmodus und einem autonomen Betriebsmodus der Steuereinheit (20, 20') bei ermitteltem autonomen Fahrmodus und
- einer Ausbildung der Steuerschaltung (26, 26') zum Ansteuern der Ventileinheit (28, 28') im regulären Fahrbetrieb im autonomen Betriebsmodus gegenüber dem manuellen Betriebsmodus auf derart unterschiedliche Weise, dass in Erwiderung auf einen Stromausfall an der Feststellbremseinrichtung (4, 4') im regulären Fahrbetrieb im manuellen Betriebsmodus der erste Ausgang (12) gegen die Drucksenke (32, 58) abgesperrt bleibt und im autonomen Betriebsmodus der erste Ausgang (12) mit der Drucksenke (32, 58) verbunden wird.

9. Steuereinheit nach Anspruch 8,
**gekennzeichnet durch**
eine Ausbildung der Steuerschaltung (26, 26') derart, dass die Steuerschaltung (26, 26') im Falle einer erkannten Fehlfunktion des Fahrzeugs (100) eine Ansteuerung zum Absperrventil (A) stromlos schaltet.

10. Steuereinheit nach einem der Ansprüche 8 bis 9,
**dadurch gekennzeichnet, dass**
die Ventileinheit (28, 28') eine Verbindungsleitung (40), ein bistabiles Ventil (B) zum druckübertragenden Verbinden der Verbindungsleitung (40) mit der Drucksenke (32) und Absperren der Verbindungsleitung (40) gegen eine Druckquelle (16) in einem ersten Schaltzustand (SB1) und zum druckübertragenden Verbinden der Verbindungsleitung (40) mit der Druckquelle (16) und Absperren der Verbindungsleitung (40) gegen die Drucksenke (32) in einem zweiten Schaltzustand, eine Steuerdruckleitung (34) zum Bereitstellen des Steuerdrucks für den ersten Ausgang (12) und ein monostabiles Absperrventil (A) zum druckübertragenden Verbinden der Verbindungsleitung (40) mit der Steuerdruckleitung (34) in einem ersten, unbestromt mittels der Kraft einer Feder einnehmbaren Schaltzustand (SA1) und zum Absperren der Verbindungsleitung (40) gegen die Steuerdruckleitung in einem zweiten, bestromt einnehmbaren Schaltzustand (SA2) aufweist.

11. Steuereinheit nach Anspruch 10,
**gekennzeichnet durch**
ein drittes Ventil (C; C'), welches unbestromt mittels der Kraft einer Feder einen ersten Schaltzustand (SC1; SC1') einnimmt, in dem ein mit einem Anhängersteuerventil (62; 62') verbindbarer zweiter Ausgang (64, 64') der Feststellbremseinrichtung (4, 4') mit dem ersten Ausgang (12) oder mit der Steuerdruckleitung (34) oder mit der Verbindungsleitung (40) verbunden ist und/oder gegen die Druckquelle (16) abgesperrt ist.

12. Feststellbremseinrichtung für ein Fahrzeug (100), das in einem autonomen Fahrmodus betreibbar ist, mit einer Ventileinheit (28, 28') und mit einer Steuereinheit (20, 20') zur Ansteuerung der Ventileinheit (28, 28'), **gekennzeichnet durch**
eine Ausbildung der Steuereinheit (20, 20') nach einem der Ansprüche 8 bis 11.

13. Bremsanlage für ein Fahrzeug (100), das in einem autonomen Fahrmodus betreibbar ist,
**gekennzeichnet durch**
eine Feststellbremseinrichtung (4, 4') nach Anspruch 12 und den Federspeicherbremszylinder (8), der den mit dem ersten Ausgang (12) der Feststellbremseinrichtung (4, 4') druckübertragend verbundenen Federspeicherteil (10) aufweist.

14. Fahrzeug, das in einem autonomen Fahrmodus betreibbar ist, mit einer Bremsanlage (2, 2') und mit mittels der Bremsanlage (2, 2') feststellbaren Rädern,
**gekennzeichnet durch**
eine Ausbildung der Bremsanlage (2, 2') nach Anspruch 13.

15. Fahrzeug nach Anspruch 14,
**gekennzeichnet durch**
eine Ausbildung als Absicherungsfahrzeug zum Absichern einer Wanderbaustelle in seinem autonomen Fahrmodus, wobei das Fahrzeug (100) aufweist:
- Geschwindigkeitsregelmittel (104), die zum Regeln der Geschwindigkeit des Fahrzeugs (100) derart ausgebildet sind, dass das Fahrzeug (100) eine vorgegebene Höchstgeschwindigkeit nicht überschreitet, die maximal 20 km/h, vorzugsweise maximal 16 km/h, insbesondere zwischen 8 und 16 km/h, besonders bevorzugt 12 km/h, beträgt,
- Abstandshaltemittel (106) die ausgebildet sind zum Ermitteln des Ist-Abstands des Fahrzeugs zu einem vorausfahrenden Fahrzeug (100) mittels Abstandssensoren, weiter ausgebildet sind zum Vergleichen des ermittelten Ist-Abstands mit einem vorgegebenen Soll-Abstand und weiter ausgebildet sind, um das Fahrzeug (100) im Falle einer erkannten Abweichung des Ist-Abstands vom Soll-Abstand, die über einem vorgegebenen Abstandsdifferenzwert liegt, innerhalb zulässiger Grenzen zu beschleunigen oder abzubremsen, um den Ist-Abstand dem Soll-Abstand anzunähern und
- Spurhaltemittel (108), die ausgebildet sind zum Ermitteln der Ist-Lage des Fahrzeugs in Bezug auf seine Soll-Lage in einer durch Fahrbahnmarkierungen und/oder durch einen Fahrbahnrand und/oder durch das vorausfahrende Fahrzeug gegebenen Spur und weiter ausgebildet sind zum Betätigen der Lenkung des Fahrzeugs (100) im Falle einer erkannten Abweichung der Ist-Lage von der Soll-Lage, die über einem vorgegebenen Versatzwert liegt, um die Ist-Lage der Soll-Lage anzunähern.

## Claims

1. Method for operating a vehicle (100) which can be operated in an autonomous driving mode,
wherein
a control unit (20, 20') of a parking brake device (4, 4') of the vehicle (100) activates a valve unit (28, 28') of the parking brake device (4, 4') in order to block a first output (12) of the parking brake device (4, 4'), which is connected to a spring storage part (10) of at least one spring storage brake cylinder (8) of the vehicle (100) in a pressure-transmitting manner, against a pressure sink (32, 58) in regular driving operation of the vehicle (100),
**characterized in that**
a control circuit (26, 26') of the control unit (20, 20') actuates the valve unit (28, 28') in such a way that, in response to a power failure on the parking brake device (4, 4') in regular driving operation in the autonomous driving mode, the first output (12) is connected in a pressure-transmitting manner to the pressure sink (32, 58) via automatic changeover of a monostable shut-off valve (A), in order to actuate the spring storage brake cylinder (8) to brake the vehicle (100), wherein
- an input circuit (22) of the control unit (20, 20') determines whether the vehicle (100) is in a manual driving mode or in the autonomous driving mode,
- a changeover circuit (24) of the control unit (20, 20') changes automatically between a manual operating mode of the control unit (20, 20') when a manual driving mode is determined and an autonomous operating mode of the control unit (20, 20') when an autonomous driving mode is determined, and
- the control circuit (26, 26') activates the valve unit (28, 28') in the regular driving mode in the autonomous operating mode in a manner that is different as compared with the manual operating mode such that, in response to a power failure on the parking brake device (4, 4') in regular driving operation in the manual operating mode, the first output (12) remains blocked against the pressure sink (32, 58) and, in the autonomous operating mode, the first output (12) is connected to the pressure sink (32, 58).

2. Method according to Claim 1,
**characterized in that**
in the event of a detected malfunction of the vehicle (100), the control circuit (26, 26') deenergizes activation of the shut-off valve (A).

3. Method according to one of the preceding claims,
**characterized in that**
a bistable valve (B) of the valve unit (28, 28') connects a connecting line (40) of the valve unit (28, 28') to the pressure sink (32) in a pressure-transmitting manner in a first switching state (SB1) and blocks it off against a pressure source (16) and, in a second switching state (SB2), connects the same to the pressure source (16) in a pressure-transmitting manner and blocks it off against the pressure sink (32), and, in a first switching state (SA1), assumed by the shut-off valve (A) by means of the force of a spring when de-energized, the shut-off valve (A) connects the connecting line (40) in a pressure-transmitting manner to a control pressure line (34) of the valve unit (28, 28') that provides a control pressure for the first output (12) and, in a second switching state (SA2), assumed by the shut-off valve (A) when energized, blocks off the connecting line (40) against the control pressure line (34).

4. Method according to Claim 3,
**characterized in that**
a third valve (C; C') of the valve unit (28, 28') assumes a first switching state (SC1; SC1') by means of the force of a spring when de-energized, in which a second output (64; 64') of the parking brake device (4, 4') that can be connected to a trailer control valve (62; 62') is connected in a pressure-transmitting manner to the first output (12) or to the control pressure line (34) or to the connecting line (40) and/or is blocked off against the pressure source (16).

5. Method according to one of the preceding claims,
**characterized in that**
- the vehicle (100), as a security vehicle in its autonomous driving mode secures a mobile construction site,
- wherein speed control means (104) of the vehicle (100) control its speed in such a way that the vehicle (100) does not exceed a predefined maximum speed, which is at most 20 km/h, preferably at most 16 km/h, in particular between 8 and 12 km/h, particularly preferably 12 km/h,
- wherein distance-maintaining means (106) of the vehicle (100) determine the current distance of the vehicle (100) from a preceding vehicle by means of distance sensors, to compare the determined current distance with a predefined target distance and, in the event of a detected deviation of the current distance from the target distance which lies above a predefined distance difference value, to accelerate or brake the vehicle (100) within permissible limits in order to bring the current distance close to the target distance, and
- wherein lane-maintaining means (108) of the vehicle (100) determine the current position of the vehicle (100) in relation to a target position in a lane given by roadway markings and/or by a roadway edge and/or by the preceding vehicle by means of the distance sensors and/or by means of further sensors and, in the event of a detected deviation of the current position from the target position which lies above a predefined offset value, actuate the steering of the vehicle (100) in order to bring the current position close to the target position.

6. Method according to one of the preceding claims,
**characterized in that**
isolating means (112) secure the vehicle (100) against unintended activation of the autonomous driving mode.

7. Method according to one of the preceding claims,
**characterized in that**
activation and/or deactivation of the autonomous driving mode is carried out from outside the vehicle (100) by means of a remote control.

8. Control unit for a parking brake device (4, 4') of a vehicle (100) which can be operated in an autonomous driving mode, wherein the control unit (4, 4') for activating a valve unit (28, 28') of the parking brake device (4, 4') is formed in such a way as to block off a first outlet (12) of the parking brake device (4, 4'), which can be connected in a pressure-transmitting manner to a spring storage part (10) of the least one spring storage brake cylinder (8) of the vehicle (100), against a pressure sink (32, 58) in regular driving operation of the vehicle (100),
**characterized by**
a control circuit (26, 26'), by means of which the valve unit (28, 28') can be activated in such a way that, in response to a power failure on the parking brake device (4, 4') in regular driving operation in the autonomous driving mode, the first output (12) is connected in a pressure-transmitting manner to the pressure sink (32, 58) via automatic changeover of a monostable shut-off valve (A), in order to actuate the spring storage brake cylinder (8) to brake the vehicle (100), comprising
- an input circuit (22) to determine whether the vehicle (100) is in a manual driving mode or in the autonomous driving mode,
- a changeover circuit (24) to change autonomously between a manual operating mode of the control unit (20, 20') when a manual driving mode is determined and an autonomous operating mode of the control unit (20, 20') when an autonomous driving mode is determined, and
- a design of the control circuit (26, 26') to activate the valve unit (28, 28') in the regular driving mode in the autonomous operating mode in a manner that is different as compared with the manual operating mode such that, in response to a power failure on the parking brake device (4, 4') in regular driving operation in the manual operating mode, the first output (12) remains blocked against the pressure sink (32, 58) and, in the autonomous operating mode, the first output (12) is connected to the pressure sink (32, 58).

9. Control unit according to Claim 8,
**characterized by**
a design of the control circuit (26, 26') such that in the event of a detected malfunction of the vehicle (100), the control circuit (26, 26') deenergizes activation of the shut-off valve (A).

10. Control unit according to one of Claims 8 and 9,
**characterized in that**
the valve unit (28, 28') has a connecting line (40), a bistable valve (B) for connecting the connecting line (40) to the pressure sink (32) in a pressure-transmitting manner and blocking the connecting line (40) off against a pressure source (16) in a first switching state (SB1) and for connecting the connecting line (40) to the pressure source (16) in a pressure-transmitting manner and blocking off the connecting line (40) against the pressure sink (32) in a second switching state, a control pressure line (34) for providing the control pressure for the first output (12) and a monostable shut-off valve (A) for connecting the connecting line (40) in a pressure-transmitting manner to the control pressure line (34) in a first switching state (SA1) that can be assumed by means of the force of a spring when de-energized and, in a second switching state (SA2) that can be assumed when energized, for blocking off the connecting line (40) against the control pressure line.

11. Control unit according to Claim 10,
**characterized by**
a third valve (C; C'), which assumes a first switching state (SC1; SC1') by means of the force of a spring when de-energized, in which a second output (64; 64') of the parking brake device (4, 4') that can be connected to a trailer control valve (62; 62') is connected to the first output (12) or to the control pressure line (34) or to the connecting line (40) and/or is blocked off against the pressure source (16).

12. Parking brake device for a vehicle (100) which can be operated in an autonomous driving mode, having a valve unit (28, 28') and having a control unit (20, 20') for activating the valve unit (28, 28'),
**characterized by**
a design of the control unit (20, 20') according to one of Claims 8 to 11.

13. Braking system for a vehicle (100) which can be operated in an autonomous driving mode,
**characterized by**
a parking brake device (4, 4') according to Claim 12 and the spring storage brake cylinder (8) which has the spring storage component (10) that is connected to the first output (12) of the parking brake device (4, 4') in a pressure-transmitting manner.

14. Vehicle which can be operated in an autonomous manner, having a braking system (2, 2') and having wheels that can be fixed by means of the braking system (2, 2'),
**characterized by**
a design of the braking system (2, 2') according to Claim 13.

15. Vehicle according to Claim 14,
**characterized by**
a design as a security vehicle for securing a mobile construction site in its autonomous driving mode, wherein the vehicle (100) has:
- speed control means (104), which are designed to control the speed of the vehicle (100) in such a way that the vehicle (100) does not exceed a predefined maximum speed, which is at most 20 km/h, preferably at most 16 km/h, in particular between 8 and 16 km/h, particularly preferably 12 km/h,
- distance maintaining means (106), which are designed to determine the current distance of the vehicle from a preceding vehicle (100) by means of distance sensors, are further designed to compare the determined current distance with a predefined target distance and are further designed, in the event of a detected deviation of the current distance from the target distance which lies above a predefined distance difference value, to accelerate or to brake the vehicle (100) within permissible limits in order to bring the current distance closer to the target distance, and
- lane-maintaining means (108), which are designed to determine the current position of the vehicle in relation to its target position in a lane given by roadway markings and/or by a roadway edge and/or by the preceding vehicle, and, in the event of a detected deviation of the current position from the target position which lies above a predefined offset value, are further designed to actuate the steering of the vehicle (100) to bring the current position closer to the target position.

## Revendications

1. Procédé pour faire fonctionner un véhicule (100) qui peut fonctionner dans un mode de conduite autonome,
une unité de commande (20, 20') d'un dispositif de frein de stationnement (4, 4') du véhicule (100) pilotant une unité de vanne (28, 28') du dispositif de frein de stationnement (4, 4') afin de, en régime de conduite normal du véhicule (100), fermer une première sortie (12) du dispositif de frein de stationnement (4, 4'), reliée en transmission de pression à une partie accumulateur à ressort (10) d'au moins un cylindre de frein à accumulateur (8) du véhicule (100), par rapport à un réducteur de pression (32, 58),
**caractérisé en ce que**
un circuit de commande (26, 26') de l'unité de commande (20, 20') pilote l'unité de vanne (28, 28') de telle sorte qu'en réponse à une panne électrique au niveau du dispositif de frein de stationnement (4, 4') en régime de conduite normal en mode de conduite autonome, la première sortie (12) est reliée en transmission de pression au réducteur de pression (32, 58) par permutation automatique d'une vanne d'arrêt (A) monostable afin d'actionner le cylindre de frein à accumulateur (8) en vue de freiner le véhicule (100),
- un circuit d'entrée (22) de l'unité de commande (20, 20') détermine si le véhicule (100) se trouve dans un mode de conduite manuel ou dans le mode de conduite autonome,
- un circuit inverseur (24) de l'unité de commande (20, 20') permute automatiquement entre un mode de fonctionnement manuel de l'unité de commande (20, 20') si le mode de conduite manuel est déterminé et un mode de fonctionnement autonome de l'unité de commande (20, 20') si le mode de conduite autonome est déterminé et
- le circuit de commande (26, 26') pilote l'unité de vanne (28, 28') en régime de conduite normal en mode de fonctionnement autonome d'une manière différente par rapport au mode de fonctionnement manuel de telle sorte qu'en réponse à une panne électrique au niveau du dispositif de frein de stationnement (4, 4') en régime de conduite normal, en mode de fonctionnement manuel, la première sortie (12) reste fermée par rapport au réducteur de pression (32, 58) et en mode de fonctionnement autonome, la première sortie (12) est reliée au réducteur de pression (32, 58).

2. Procédé selon la revendication 1, **caractérisé en ce que** le circuit de commande (26, 26') met hors tension un pilotage vers la vanne d'arrêt (A) dans le cas d'un défaut de fonctionnement reconnu du véhicule (100) .

3. Procédé selon l'une des revendications précédentes, **caractérisé en ce qu'**une vanne bistable (B) de l'unité de vanne (28, 28'), dans un premier état de commutation (SB1), relie en transmission de pression une conduite de liaison (40) de l'unité de vanne (28, 28') au réducteur de pression (32) et la ferme par rapport à une source de pression (16) et, dans un deuxième état de commutation (SB2) la relie en transmission de pression à la source de pression (16) et la ferme par rapport au réducteur de pression (32) et la vanne d'arrêt (A), dans un premier état de commutation (SA1) qu'adopte la vanne d'arrêt (A) hors tension au moyen de la force d'un ressort, relie en transmission de pression la ligne de liaison (40) à une conduite de pression de commande (34) de l'unité de vanne (28, 28') qui délivre une pression de commande pour la première sortie (12) et, dans un deuxième état de commutation (SA2) qu'adopte la vanne d'arrêt (A) sous tension, la ferme par rapport à la conduite de pression de commande (34).

4. Procédé selon la revendication 3, **caractérisé en ce qu'**une troisième vanne (C ; C') de l'unité de vanne (28, 28') hors tension adopte, au moyen de la force d'un ressort, un premier état de commutation (SC1 ; SC1') dans lequel une deuxième sortie (64 ; 64') du dispositif de frein de stationnement (4, 4') pouvant être reliée à une vanne de commande de remorque (62 ; 62') est reliée en transmission de pression à la première sortie (12) ou à la conduite de pression de commande (34) ou à la conduite de liaison (40) et/ou est fermée par rapport à la source de pression (16).

5. Procédé selon l'une des revendications précédentes, **caractérisé en ce que**
- le véhicule (100), en tant que véhicule de sécurisation, sécurise dans son mode de conduite autonome un chantier mobile,
- des moyens de régulation de vitesse (104) du véhicule (100) régulant sa vitesse de telle sorte que le véhicule (100) ne dépasse pas une vitesse maximale prédéfinie, laquelle est au maximum de 20 km/h, de préférence au maximum de 16 km/h, notamment comprise entre 8 et 12 km/h, particulièrement de préférence étant à 12 km/h,
- des moyens de maintien de distance (106) du véhicule (100) déterminant la distance réelle du véhicule (100) par rapport à un véhicule qui précède au moyen de capteurs de distance, comparant la distance réelle déterminée à une distance de consigne prédéfinie et, dans le cas d'un écart constaté entre la distance réelle et la distance de consigne qui est supérieur à une valeur de différence de distance prédéfinie, accélérant ou freinant le véhicule (100) au sein de limites autorisées afin de rapprocher la distance réelle de la distance de consigne, et
- des moyens de suivi de voie (108) du véhicule (100) déterminant, au moyen des capteurs de distance et/ou au moyen de capteurs supplémentaires, la position réelle du véhicule (100) par rapport à une position de consigne dans une voie définie par des marquages de la chaussée et/ou par une bordure de la chaussée et/ou par le véhicule qui précède et, dans le cas d'un écart constaté entre la position réelle et la position de consigne qui est supérieur à une valeur de décalage prédéfinie, actionnant la direction du véhicule (100) en vue de rapprocher la position réelle de la position de consigne.

6. Procédé selon l'une des revendications précédentes, **caractérisé en ce que** des moyens de libération (112) sécurisent le véhicule (100) contre une activation involontaire du mode de conduite autonome.

7. Procédé selon l'une des revendications précédentes, **caractérisé en ce qu'**une activation et/ou une désactivation du mode de conduite autonome sont effectuées au moyen d'une commande à distance en-dehors du véhicule (100).

8. Unité de commande pour d'un dispositif de frein de stationnement (4, 4') d'un véhicule (100) qui peut fonctionner dans un mode de conduite autonome, l'unité de commande (4, 4'), en vue de piloter une unité de vanne (28, 28') du dispositif de frein de stationnement (4, 4'), étant configurée pour, en régime de conduite normal du véhicule (100), fermer une première sortie (12) du dispositif de frein de stationnement (4, 4'), pouvant être reliée en transmission de pression à une partie accumulateur à ressort (10) d'au moins un cylindre de frein à accumulateur (8) du véhicule (100), par rapport à un réducteur de pression (32, 58), **caractérisée par**
un circuit de commande (26, 26') au moyen duquel l'unité de vanne (28, 28') est pilotée de telle sorte qu'en réponse à une panne électrique au niveau du dispositif de frein de stationnement (4, 4') en régime de conduite normal en mode de conduite autonome, la première sortie (12) est reliée en transmission de pression au réducteur de pression (32, 58) par permutation automatique d'une vanne d'arrêt (A) monostable afin d'actionner le cylindre de frein à accumulateur (8) en vue de freiner le véhicule (100), comprenant
- un circuit d'entrée (22) destiné à déterminer si le véhicule (100) se trouve dans un mode de conduite manuel ou dans le mode de conduite autonome,
- un circuit inverseur (24) destiné à permuter de manière autonome entre un mode de fonctionnement manuel de l'unité de commande (20, 20') si le mode de conduite manuel est déterminé et un mode de fonctionnement autonome de l'unité de commande (20, 20') si le mode de conduite autonome est déterminé et
- une configuration du circuit de commande (26, 26') destinée à piloter l'unité de vanne (28, 28') en régime de conduite normal en mode de fonctionnement autonome d'une manière différente par rapport au mode de fonctionnement manuel de telle sorte qu'en réponse à une panne électrique au niveau du dispositif de frein de stationnement (4, 4') en régime de conduite normal, en mode de fonctionnement manuel, la première sortie (12) reste fermée par rapport au réducteur de pression (32, 58) et en mode de fonctionnement autonome, la première sortie (12) est reliée au réducteur de pression (32, 58).

9. Unité de commande selon la revendication 8, **caractérisée par** une configuration du circuit de commande (26, 26') de telle sorte que le circuit de commande (26, 26') met hors tension un pilotage vers la vanne d'arrêt (A) dans le cas d'un défaut de fonctionnement reconnu du véhicule (100).

10. Unité de commande selon l'une des revendications 8 à 9, **caractérisé en ce que** l'unité de vanne (28, 28') possède une conduite de liaison (40), une vanne bistable (B) destinée à relier en transmission de pression la conduite de liaison (40) au réducteur de pression (32) et à fermer la conduite de liaison (40) par rapport à une source de pression (16) dans un premier état de commutation (SB1) et, dans un deuxième état de commutation, relier en transmission de pression la conduite de liaison (40) à la source de pression (16) et fermer la conduite de liaison (40) par rapport au réducteur de pression (32), une conduite de pression de commande (34) destinée à délivrer la pression de commande pour la première sortie (12) et une vanne d'arrêt (A) monostable destinée à relier en transmission de pression la ligne de liaison (40) à la conduite de pression de commande (34) dans un premier état de commutation (SA1) hors tension pouvant être adopté au moyen de la force d'un ressort, et à fermer la ligne de liaison (40) par rapport à la conduite de pression de commande dans un deuxième état de commutation (SA2) pouvant être adopté sous tension.

11. Unité de commande selon la revendication 10, **caractérisée par** une troisième vanne (C ; C') qui, hors tension, adopte au moyen de la force d'un ressort un premier état de commutation (SC1 ; SC1') dans lequel une deuxième sortie (64 , 64') du dispositif de frein de stationnement (4, 4') pouvant être reliée à une vanne de commande de remorque (62 ; 62') est reliée à la première sortie (12) ou à la conduite de pression de commande (34) ou à la conduite de liaison (40) et/ou est fermée par rapport à la source de pression (16).

12. Dispositif de frein de stationnement pour un véhicule (100) qui peut fonctionner dans un mode de conduite autonome, comprenant une unité de vanne (28, 28') et comprenant une unité de commande (20, 20') destinée à piloter l'unité de vanne (28, 28'), **caractérisé par** une configuration de l'unité de commande (20, 20') selon l'une des revendications 8 à 11.

13. Système de freinage pour un véhicule (100) qui peut fonctionner dans un mode de conduite autonome, **caractérisé par** un dispositif de frein de stationnement (4, 4') selon la revendication 12 et le cylindre de frein à accumulateur (8) qui possède la partie accumulateur à ressort (10) reliée en transmission de pression à la première sortie (12) du dispositif de frein de stationnement (4, 4').

14. Véhicule qui peut fonctionner dans un mode de conduite autonome, comprenant un système de freinage (2, 2') et comprenant des roues pouvant être immobilisées au moyen du système de freinage (2, 2'), **caractérisé par** une configuration du système de freinage (2, 2') selon la revendication 13.

15. Véhicule selon la revendication 14,
**caractérisé par**
une configuration en tant que véhicule de sécurisation destiné à sécuriser, dans son mode de conduite autonome, un chantier mobile, le véhicule (100) possédant :
- des moyens de régulation de vitesse (104) qui, pour réguler la vitesse du véhicule (100), sont configurés de telle sorte que le véhicule (100) ne dépasse pas une vitesse maximale prédéfinie, laquelle est au maximum de 20 km/h, de préférence au maximum de 16 km/h, notamment comprise entre 8 et 16 km/h, particulièrement de préférence étant à 12 km/h,
- des moyens de maintien de distance (106) qui sont configurés pour déterminer la distance réelle du véhicule par rapport à un véhicule qui précède (100) au moyen de capteurs de distance, qui sont en outre configurés pour comparer la distance réelle déterminée à une distance de consigne prédéfinie et qui sont en outre configurés pour, dans le cas d'un écart constaté entre la distance réelle et la distance de consigne qui est supérieur à une valeur de différence de distance prédéfinie, accélérer ou freiner le véhicule (100) au sein de limites autorisées afin de rapprocher la distance réelle de la distance de consigne, et
- des moyens de suivi de voie (108) qui sont configurés pour déterminer la position réelle du véhicule par rapport à sa position de consigne dans une voie définie par des marquages de la chaussée et/ou par une bordure de la chaussée et/ou par le véhicule qui précède et qui sont en outre configurés pour, dans le cas d'un écart constaté entre la position réelle et la position de consigne qui est supérieur à une valeur de décalage prédéfinie, actionner la direction du véhicule (100) en vue de rapprocher la position réelle de la position de consigne.
